# EUROPEAN PATENT APPLICATION

(11) **EP 4 563 302 A1**
(43) Date of publication of application: **04.06.2025**
(21) Application number: 23909174.7
(22) Date of filing: 10.08.2023
(51) Int. Cl.: B25J 11/00, B65H 19/30

(54) **DOCKING ROBOT**

(30) Priority: 30.12.2022 CN 202223612864 U
(71) Applicant: Hangzhou Hikrobot Co., Ltd., Hangzhou, Zhejiang 310051 (CN)
(72) Inventor: LV, Wangbiao, Hangzhou, Zhejiang 310051 (CN); BAI, Han, Hangzhou, Zhejiang 310051 (CN)
(74) Representative: Yang, Shu
(86) International application number: PCT/CN2023/112195
(87) International publication number: WO 2024/139232

(57) **Abstract**

A docking robot, a first bearing frame and a second bearing frame of the docking robot are both used for bearing a material to be transferred; the first bearing frame is mounted on a first vertical adjustment mechanism; the second bearing frame is mounted on a second vertical adjustment mechanism; position adjustment directions of the first vertical adjustment mechanism and the second vertical adjustment mechanism are arranged in parallel; the first vertical adjustment mechanism and the second vertical adjustment mechanism are both mounted on a second horizontal adjustment mechanism; the second horizontal adjustment mechanism is mounted on a first horizontal adjustment mechanism; the first horizontal adjustment mechanism is mounted on a powered chassis; position adjustment directions of the first horizontal adjustment mechanism and the second horizontal adjustment mechanism are arranged in non-parallel and are perpendicular to the position adjustment directions of the first vertical adjustment mechanism and the second vertical adjustment mechanism, respectively. According to the docking robot, the problems of limited use range and low working efficiency due to the fact that two bins of existing double-bin-type docking robots are lifted or lowered at the same time and cannot act individually can be solved.

## Description

The present application claims the priority to a Chinese patent application 202223612864.8 filed with the China National Intellectual Property Administration (CNIPA) on December 30, 2022 and entitled "DOCKING ROBOT", which is incorporated herein by reference in its entirety.

### Technical Field

The present application relates to the field of robotics technology, in particular to a docking robot.

### Background

With the continuous advancement of technology, in more and more working scenarios, manual work can be replaced by robots. Taking transporting or replacing a material as an example, the robots have gradually replaced manpower, with saving a lot of labor, and the robots can operate uninterruptedly, with improving working efficiency, and a level of intelligence is gradually improving.

The current docking robots include single-bin type and double-bin type. Due to a relatively low transfer efficiency of the single-bin-type docking robots, they have been gradually replaced by the double-bin-type docking robots. However, both material bins in a current double-bin-type robot is lifted or lowered at the same time and cannot act individually. When the material bins of the double-bin-type robot carries a full material roll and performs a docking for an empty material roll with the full material roll, the robot needs to perform many motion control actions, so that its use range is partially limited and the working efficiency needs to be further improved.

### Summary

The present application discloses a docking robot to solve the problems that two material bins in the existing double-bin-type docking robots are lifted or lowered synchronously and cannot act individually, causing the applying range to be partially limited, and the working efficiency to be further improved.

In order to solve the above problems, the present application adopts the following technical solutions:
The present application discloses a docking robot, which includes a powered chassis, a first bearing frame, a second bearing frame, a first vertical adjustment mechanism, a second vertical adjustment mechanism, a first horizontal adjustment mechanism and a second horizontal adjustment mechanism;
wherein the first bearing frame and the second bearing frame are both for bearing a material to be transferred, and the first bearing frame is mounted on the first vertical adjustment mechanism and the second bearing frame is mounted on the second vertical adjustment mechanism, position adjustment directions of the first vertical adjustment mechanism and the second vertical adjustment mechanism are arranged to be parallel, and the first vertical adjustment mechanism and the second vertical adjustment mechanism both are mounted on the second horizontal adjustment mechanism, the second horizontal adjustment mechanism is mounted on the first horizontal adjustment mechanism, and the first horizontal adjustment mechanism is mounted on the powered chassis, position adjustment directions of the first horizontal adjustment mechanism and the second horizontal adjustment mechanism are arranged to be non-parallel and position adjustment directions of the first horizontal adjustment mechanism and the second horizontal adjustment mechanism are both perpendicular to the position adjustment directions of the first vertical adjustment mechanism and the second vertical adjustment mechanism.

In one possible embodiment, the second vertical adjustment mechanism is mounted on the first bearing frame.

In one possible embodiment, one end of the second vertical adjustment mechanism away from the second horizontal adjustment mechanism is arranged to be below or flush with a bearing surface of the first bearing frame.

In one possible embodiment, the second vertical adjustment mechanism includes a guiding rail and a slider that cooperate in a sliding manner, the guiding rail is fixed to one side of the first vertical adjustment mechanism facing the second bearing frame, and the second bearing frame is fixedly connected to the slider.

In one possible embodiment, two first vertical adjustment mechanisms are provided, the first bearing frame includes a first bearing block and a second bearing block which are spaced apart from each other, the first bearing block and the second bearing block are used collectively for bearing the material to be transferred, and the first bearing block and the second bearing block are arranged in one-to-one correspondence with the two first vertical adjustment mechanisms.

In one possible embodiment, two first horizontal adjustment mechanisms and two second horizontal adjustment mechanisms are provided, the two first vertical adjustment mechanisms are mounted on the two second horizontal adjustment mechanisms in one-to-one correspondence, and the two second horizontal adjustment mechanisms are mounted on the two first horizontal adjustment mechanisms in one-to-one correspondence.

In one possible embodiment, each of the first bearing frame and the second bearing frame has a positioning camera mounted thereon.

In one possible embodiment, the first vertical adjustment mechanism includes a driving member, a guiding rail and a slider, the driving member is for driving the first bearing frame to move in a vertical direction, the slider is mounted on the second horizontal adjustment mechanism, the first bearing frame is mounted on the guiding rail, and the slider and the guiding rail cooperate in a sliding manner.

In one possible embodiment, the driving member includes a rotating motor, the first vertical adjustment mechanism further includes a rotation transmission mechanism and a linear transmission mechanism, the rotation transmission mechanism includes a first gear and a second gear that are meshed with each other, the linear transmission mechanism includes a leading screw and a leading screw nut, the leading screw nut is spirally mounted on the leading screw, and the leading screw nut is fixedly connected to the first bearing frame, the first gear is mounted on the rotating motor, and the second gear is mounted on the leading screw.

In one possible embodiment, structures of the second vertical adjustment mechanism, the first horizontal adjustment mechanism and the second horizontal adjustment mechanism are the same as a structure of the first vertical adjustment mechanism.

The technical solutions used in the present application can achieve the following beneficial effects:
The embodiment of the present application discloses a docking robot, which includes the first bearing frame and the second bearing frame, both of which are used for bearing the material to be transferred, wherein the first bearing frame is mounted on the first vertical adjustment mechanism, and the second bearing frame is mounted on the second vertical adjustment mechanism, so that the first vertical adjustment mechanism and the second vertical adjustment mechanism are used for adjusting the positions of the first bearing frame and the second bearing frame in the vertical direction respectively, so that the first bearing frame and the second bearing frame can be lifted or lowered individually, so that in the process of docking an empty material roll and a full material roll, an applying range of the docking robot is not limited, and the working efficiency can be further improved; at the same time, the first vertical adjustment mechanism and the second vertical adjustment mechanism are both mounted on the second horizontal adjustment mechanism, and the second horizontal adjustment mechanism is mounted on the first horizontal adjustment mechanism. By arranging the position adjustment directions of the first horizontal adjustment mechanism and the second horizontal adjustment mechanism both perpendicular to the position adjustment directions of the first vertical adjustment mechanism and the second vertical adjustment mechanism, and arranging the position adjustment directions of the first horizontal adjustment mechanism and the second horizontal adjustment mechanism to be non-parallel, under the action of the first horizontal adjustment mechanism and the second horizontal adjustment mechanism, the positions of the first bearing frame and the second bearing frame in the horizontal plane perpendicular to the vertical direction can be adjusted, so as to achieve the purpose of adjusting the positions of the first bearing frame and the second bearing frame in the three-dimensional space.

### Brief Description of the Drawings

The accompanying drawings described here are used to provide a further understanding of the present application and constitute a part of the same. The schematic embodiments of the present application and the descriptions thereof are used to explain the present application and do not constitute an improper limitation of the present application.
Fig. 1 is a schematic diagram of a structure of a docking robot disclosed in an embodiment of the present application;
Fig. 2 is a schematic diagram of an assembling relationship between a docking robot and a material roll disclosed in an embodiment of the present application;
Fig. 3 is a schematic diagram of an internal structural of a docking robot disclosed in an embodiment of the present application;
Fig. 4 and Fig. 5 are schematic diagrams of partial structures of a docking robot disclosed in embodiments of the present application;
Fig. 6 is an operation schematic diagram of a docking robot disclosed in an embodiment of the present application.

Description of reference signs:
100- powered chassis, 110- frame, 120- steering wheel,
201- guiding rail, 202- slider, 203- leading screw, 204- leading screw nut, 205- first gear, 206- second gear, 207- driving member, 211- first bearing frame, 212- second bearing frame, 221- first vertical adjustment mechanism, 222- second vertical adjustment mechanism, 231- first horizontal adjustment mechanism, 232- second horizontal adjustment mechanism,
300- positioning camera,
400- housing,
900- material roll.

### Detailed Description

In order to make the objects, technical solutions and advantages of the invention clearer and more understandable, the invention will be further described in detail below with reference to the accompanying drawings and embodiments. Obviously, the described embodiments are only some, and not all, of the embodiments of the invention. All other embodiments obtained by those skilled in the art based on the embodiments of the invention fall into the scope of protection of the invention.

The technical solutions disclosed in various embodiments of the present application are described in detail below in conjunction with the accompanying drawings.

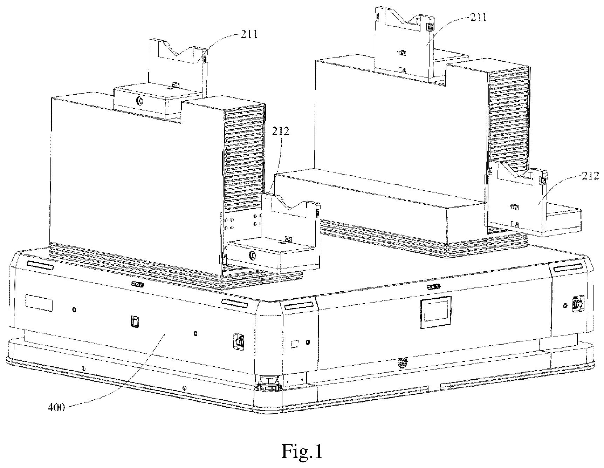

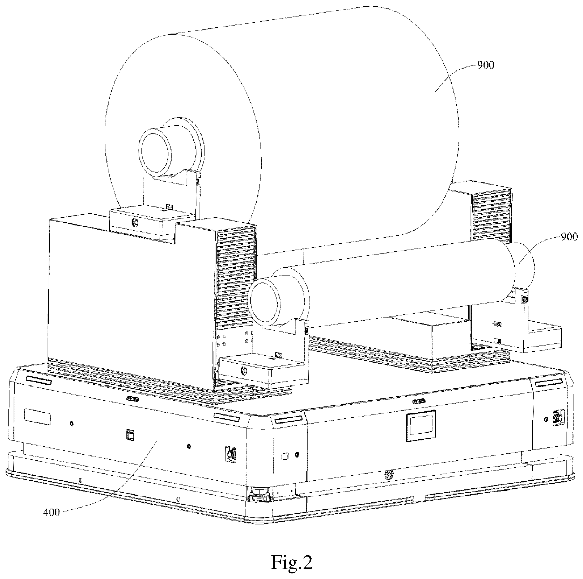

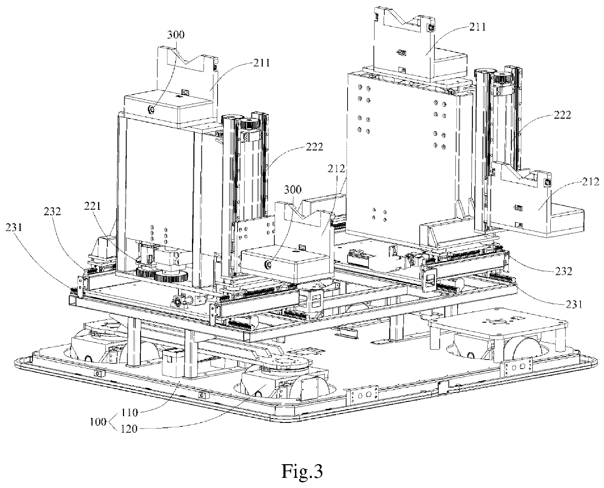

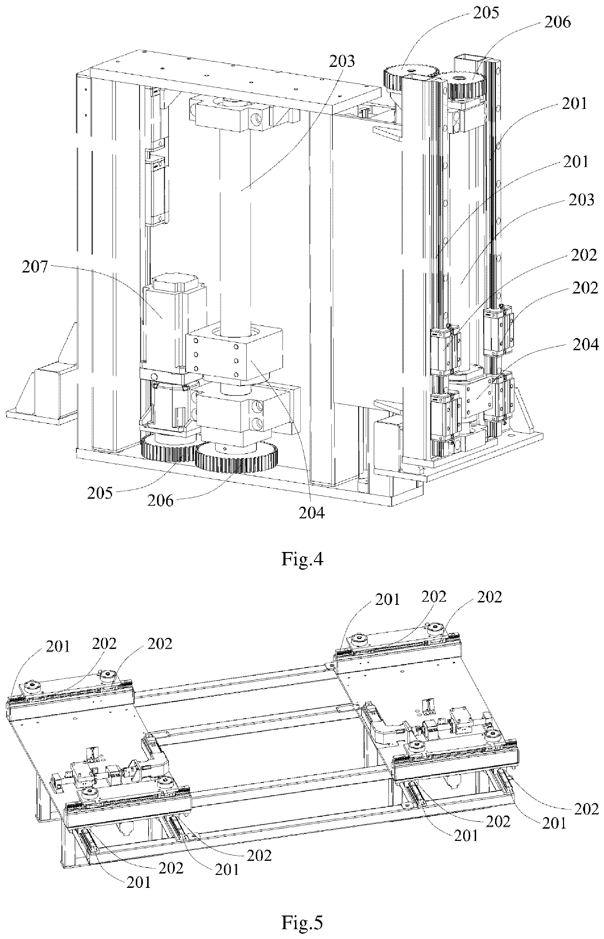

As shown in Fig. 1 to Fig. 6, an embodiment of the present application discloses a docking robot, which may be used in working scenarios such as material transfer, and includes a powered chassis 100, a first bearing frame 211, a second bearing frame 212, a first vertical adjustment mechanism 221, a second vertical adjustment mechanism 222, a first horizontal adjustment mechanism 231, and a second horizontal adjustment mechanism 232. Of course, the docking robot may further include a device such as a housing 400, and the housing 400 may be arranged outside and hood the powered chassis 100 and any other mechanism to provide protection for the powered chassis 100 and the any other mechanism, and may improve an appearance performance of the entire docking robot.

The powered chassis 100 is a moving mechanism of the docking robot, which can drive the entire docking robot to move on a working surface such as the ground. The powered chassis 100 may include a frame 110 and rollers. The frame 110 is a main structure of the powered chassis 100, and any other component in the docking robot can be mounted on the frame 110. At least three rollers are provided.

In a possible implementation, any of the rollers is connected to a device such as a drive motor, so as to drive the frame 110 to move.

In addition, any of the rollers can be a steering wheel 120 or a universal wheel, so that the powered chassis 100 can turn and flexibility of the docking robot is improved.

The first bearing frame 211 and the second bearing frame 212 are both mechanisms in the docking robot for bearing a material to be transferred, such as a material roll 900. The specific structures of the both can be selected correspondingly according to the material to be carried. In a possible embodiment, the docking robot disclosed in the embodiment of the present application can be used for bearing and transferring the material roll 900, which includes a roll with material wound on a roller shaft and an empty roller shaft. Based on this, in the embodiment of the present application, the first bearing frame 211 and the second bearing frame 212 can each include two bearing blocks, wherein the two bearing blocks are spaced apart from each other, and a spacing between corresponding two bearing blocks can be determined according to specific parameters such as a axial length of the material roll 900 to be carried and transferred; at the same time, an upper surface of any one of the bearing blocks is provided with a V-shaped groove, so that in the process of bearing and transferring the material roll 900, the roller shaft can be limited to the V-shaped groove to ensure that the material roll 900 can be stably carried on the first bearing frame 211 (or the second bearing frame 212).

As mentioned above, the powered chassis 100 can move the entire docking robot relative to the working surface to carry and move the material roll 900 to a corresponding working position, and the working position can be specifically at a material bin of a machine tool, or the working position can be a position for disassembling the material to be transferred. However, considering that movement accuracy of the powered chassis 100 is relatively low, when the docking robot docks the empty material roll and the full material roll, a position deviation of the empty material roll and the full material roll is large, so that the docking robot cannot perform docking accurately. In order to ensure that the docking robot can have high-precision docking capability, as mentioned above, the docking robot disclosed in the embodiment of the present application includes mechanisms such as the first vertical adjustment mechanism 221 for adjusting positions of the first bearing frame 211 and the second bearing frame 212 relative to the powered chassis 100. In other words, the first vertical adjustment mechanism 221 is used for adjusting the positions of the first bearing frame 211 and the second bearing frame 212 relative to the powered chassis 100. The adjustment accuracy of these mechanisms is high, which can ensure that the docking robot has high-precision docking capability.

Position adjustment directions of the first vertical adjustment mechanism 221 and the second vertical adjustment mechanism 222 are arranged to be parallel, more specifically, the first vertical adjustment mechanism 221 and the second vertical adjustment mechanism 222 both are used for providing adjustment capability in a vertical direction. Position adjustment directions of the first horizontal adjustment mechanism 231 and the second horizontal adjustment mechanism 232 are both perpendicular to the position adjustment directions of the first vertical adjustment mechanism 221 and the second vertical adjustment mechanism 222, that is, the first horizontal adjustment mechanism 231 and the second horizontal adjustment mechanism 232 are both used for providing the position adjustment capability in a horizontal direction, wherein the vertical direction herein refers to a direction perpendicular to the working surface, and the horizontal direction refers to a direction parallel to the working surface. At the same time, the position adjustment directions of the first horizontal adjustment mechanism 231 and the second horizontal adjustment mechanism 232 are arranged to be non-parallel, so that three of the first vertical adjustment mechanism 221, the first horizontal adjustment mechanism 231 and the second horizontal adjustment mechanism 232 operate together, so that a position of the first bearing frame 211 in a three-dimensional space can be adjusted arbitrarily.

Accordingly, when three of the second vertical adjustment mechanism 222, the first horizontal adjustment mechanism 231 and the second horizontal adjustment mechanism 232 operate together, a position of the second bearing frame 212 in a three-dimensional space can be adjusted arbitrarily, so as to achieve high-precision docking of the first bearing frame 211 and the second bearing frame 212 with the machine tool. Furthermore, the position adjustment directions of the first horizontal adjustment mechanism 231 and the second horizontal adjustment mechanism 232 can be perpendicular to each other, which can further reduce difficulty of adjusting the positions of the first bearing frame 211 and the second bearing frame 212 in the horizontal direction.

More specifically, during the process of assembling the docking robot, the first bearing frame 211 can be mounted on the first vertical adjustment mechanism 221 and the second bearing frame 212 can be mounted on the second vertical adjustment mechanism 222 in a manner such as welding or connecting by bolt members, so that a position of the first bearing frame 211 in the vertical direction can be adjusted by the first vertical adjustment mechanism 221, and a position of the second bearing frame 212 in the vertical direction can be adjusted by the second vertical adjustment mechanism 222.

At the same time, the first vertical adjustment mechanism 221 and the second vertical adjustment mechanism 222 are both mounted on the second horizontal adjustment mechanism 232, so that under an action of the second horizontal adjustment mechanism 232, positions of the first vertical adjustment mechanism 221 and the second vertical adjustment mechanism 222 (as well as the first bearing frame 211 and the second bearing frame 212) in a horizontal adjustment direction of the second horizontal adjustment mechanism 232 can be adjusted by the second horizontal adjustment mechanism 232.

Accordingly, the second horizontal adjustment mechanism 232 is mounted on the first horizontal adjustment mechanism 231, and under an action of the first horizontal adjustment mechanism 231, positions of the second horizontal adjustment mechanism 232 and any other mechanism mounted on the second horizontal adjustment mechanism 232 in a horizontal adjustment direction of the first horizontal adjustment mechanism 231 can be adjusted by the first horizontal adjustment mechanism 231.

In addition, the first horizontal adjustment mechanism 231 is mounted on the powered chassis 100, thereby ensuring that the first horizontal adjustment mechanism 231, the second horizontal adjustment mechanism 232, the first vertical adjustment mechanism 221 and the second vertical adjustment mechanism 222 can all take the powered chassis 100 as a reference system to provide a position adjustment function and achieve a purpose of adjusting the positions of the first bearing frame 211 and the second bearing frame 212.

As described above, any of the first horizontal adjustment mechanism 231, the second horizontal adjustment mechanism 232, the first vertical adjustment mechanism 221 and the second vertical adjustment mechanism 222 is used to provide the position adjustment function on a certain straight line. To this end, one or each of the four, i.e., one mechanism of the first horizontal adjustment mechanism 231, the second horizontal adjustment mechanism 232, the first vertical adjustment mechanism 221 and the second vertical adjustment mechanism 222 or each of the first horizontal adjustment mechanism 231, the second horizontal adjustment mechanism 232, the first vertical adjustment mechanism 221 and the second vertical adjustment mechanism 222 may include a cylinder, a hydraulic cylinder or a linear motor to provide a linear driving function and drive a driven mechanism to move.

An embodiment of the present application discloses a docking robot, which includes the first bearing frame 211 and the second bearing frame 212, both of which are used for bearing the material to be transferred, wherein the first bearing frame 211 is mounted on the first vertical adjustment mechanism 221, and the second bearing frame 212 is mounted on the second vertical adjustment mechanism 222, so that the first vertical adjustment mechanism 221 and the second vertical adjustment mechanism 222 are used for adjusting the positions of the first bearing frame 211 and the second bearing frame 212 in the vertical direction respectively, so that the first bearing frame 211 and the second bearing frame 212 can be lifted or lowered individually, so that in the process of docking an empty material roll with a full material roll, a applying range of the docking robot is not limited, and thus the working efficiency of the docking robot can be further improved; at the same time, the first vertical adjustment mechanism 221 and the second vertical adjustment mechanism 222 are both mounted on the second horizontal adjustment mechanism 232, and the second horizontal adjustment mechanism 232 is mounted on the first horizontal adjustment mechanism 231. By arranging both of the position adjustment directions of the first horizontal adjustment mechanism 231 and the second horizontal adjustment mechanism 232 perpendicular to the position adjustment directions of the first vertical adjustment mechanism 221 and the second vertical adjustment mechanism 222, and arranging the position adjustment directions of the first horizontal adjustment mechanism 231 and the second horizontal adjustment mechanism 232 to be non-parallel, under the action of the first horizontal adjustment mechanism 231 and the second horizontal adjustment mechanism 232, the positions of the first bearing frame 211 and the second bearing frame 212 in a horizontal plane perpendicular to the vertical direction can be adjusted, so as to achieve the purpose of adjusting the positions of the first bearing frame 211 and the second bearing frame 212 in the three-dimensional space, and further improve the docking accuracy of the docking robot.

In the process of arranging the first bearing frame 211 and the second bearing frame 212, the first bearing frame 211 and the second bearing frame 212 can be distributed at intervals along an axial direction of the material roll 900 to be carried. In order to further reduce the difficulty of operating the docking robot, in one possible embodiment, the first bearing frame 211 and the second bearing frame 212 are distributed along a direction perpendicular to the axial direction of the material to be transferred such as the material roll 900. In simple language, the first bearing frame 211 and the second bearing frame 212 can be distributed along a general movement direction of the docking robot when loading and unloading material in the machine tool. The general movement direction of the docking robot when loading and unloading material in the machine tool can be a movement direction of the docking robot, or can be a direction with an angle less than a preset angle threshold from the movement direction of the docking robot. Exemplarily, if the movement direction of the docking robot is south and the preset angle threshold is 5°, the general movement direction of the docking robot when loading and unloading the material in the machine tool is any direction with a degree within 5° east of south or any direction with a degree within 5° west of south. Specifically, when the docking robot is loading and unloading material in the machine tool, the docking robot needs to drive into an interior of the machine tool, and then drive out of the machine tool after completing material replacement. The movement direction of the docking robot in the above process can be a distribution direction of the first bearing frame 211 and the second bearing frame 212 in the docking robot. Exemplarily, if the movement direction of the docking robot is A→B, a line connecting the first bearing frame 211 and the second bearing frame 212 is always parallel or co-linear with a line connecting A and B.

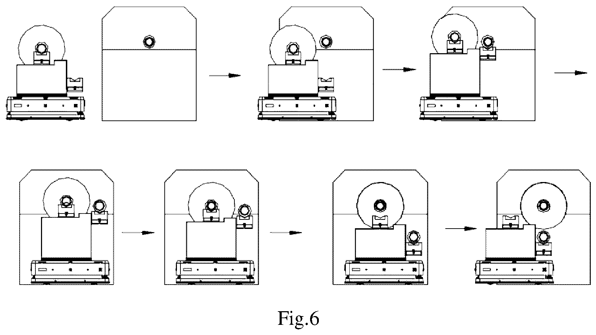

Since the first bearing frame 211 and the second bearing frame 212 in the embodiment of the present application can be individually controlled to lift and lower, when the above technical solution is adopted, as shown in Fig. 6, when it is necessary to disassemble and assemble the material roll 900, the first bearing frame 211 can carry a material roll 900 to be replaced, and the second bearing frame 212 can be empty. Then, the docking robot moves a position where the machine tool is located under the drive of the powered chassis 100. Then, under an adjustment action of the first horizontal adjustment mechanism 231 and the second horizontal adjustment mechanism 232, a center line of the second bearing frame 212 can be aligned with a center line of the machine tool, so that the second bearing frame 212 is located directly below the material roll 900 to be removed. Then, under an action of the second vertical adjustment mechanism 222, or under a joint action of both the first vertical adjustment mechanism 221 and the second vertical adjustment mechanism 222 (see other embodiments below), the second bearing frame 212 can remove the material roll 900 on the machine tool, and then the powered chassis 100 continues to move, so that the first bearing frame 211 is basically located directly above or directly below the machine tool. Under an action of the first horizontal adjustment mechanism 231 and the second horizontal adjustment mechanism 232, the first bearing frame 211 can be located directly above or directly below the material roll 900 to be removed, wherein the term "above" herein refers to a direction in which the material roll 900 is vertically away from the working surface, and the term "below" refers to a direction in which the material roll 900 is vertically pointing toward the working surface. Then, under an action of the first vertical adjustment mechanism 221, the first bearing frame 211 can mount the material roll 900 carried on the machine tool, thereby completing a replacement of the material roll 900. Then, the second vertical adjustment mechanism 222 continues to be lowered to a low position, wherein the low position refers to a position in which a position of a bearing frame in the vertical direction is lower than a preset height threshold, wherein the preset height threshold refers to a height at which the docking robot can smoothly exit from the machine tool, and the preset height threshold depends on the height of the machine tool and the size of the bearing frame. Then, the docking robot can smoothly exit from the machine tool. Obviously, in the process of replacement of the material roll 900 by using the docking robot disclosed in the embodiment of the present application, since the docking robot does not need to exit the machine tool and rotate 180° after removing the material roll 900 on the machine tool and then enter the machine tool to mount the material roll 900, the docking robot disclosed in the embodiment of the present application needs to complete fewer docking actions during the docking of the empty material roll and the full material roll, and the docking efficiency is relatively high.

As described above, the first vertical adjustment mechanism 221 and the second vertical adjustment mechanism 222 can be used to individually lift and lower the first bearing frame 211 and the second bearing frame 212. In one possible embodiment, by selecting driving displacement ranges of linear driving devices in the first vertical adjustment mechanism 221 and the second vertical adjustment mechanism 222, it can be ensured that the first bearing frame 211 and the second bearing frame 212 can individually achieve the purpose of disassembling and assembling the material roll 900 on the machine tool. That is, driving travels of the first vertical adjustment mechanism 221 and the second vertical adjustment mechanism 222 are greater than a spacing between a mounting position of the material roll 900 and the second horizontal adjustment mechanism 232 when the docking robot performs docking on the machine tool, and a driving travel of the second vertical adjustment mechanism 222 is determined correspondingly according to a radius of a fully loaded material roll, so that in disassembly and assembly process of the material roll 900, the second vertical adjustment mechanism 222 can be moved below the fully loaded material roll 900 to avoid the fully loaded material roll 900, so that the second vertical adjustment mechanism 222 will not affect the disassembly and assembly of the fully loaded material roll 900.

In another embodiment of the present application, in order to reduce design difficulty of the second vertical adjustment mechanism 222 and to save costs, the second vertical adjustment mechanism 222 can be mounted on the first bearing frame 211, that is, under an adjustment action of the first vertical adjustment mechanism 221, the second vertical adjustment mechanism 222 can be lifted or lowered along with the first bearing frame 211. In this case, the driving travel of the second vertical adjustment mechanism 222 can be relatively small, thereby reducing the assembly difficulty of the second vertical adjustment mechanism 222 and reducing costs under the premise that the second bearing frame 212 can be lifted and lowered individually.

Specifically, the second vertical adjustment mechanism 222 can be stably fixed on the first bearing frame 211 in a manner such as welding or connecting by bolt members, so as to ensure that the first vertical adjustment mechanism 221 can reliably drive the second vertical adjustment mechanism 222 to move in the vertical direction relative to the powered chassis 100. Of course, in the embodiment of the present application, it is necessary to limit an arrangement position of the second vertical adjustment mechanism 222 on the first bearing frame 211. In other words, when the second vertical adjustment mechanism 222 is fixed on the first bearing frame 211 in a manner such as welding or connecting by bolt members, the second vertical adjustment mechanism 222 is not fixed at any position on the first bearing frame 211, and a fixing position needs to be limited. Specifically, one end of the second vertical adjustment mechanism 222 away from the second horizontal adjustment mechanism 232 can be arranged to be flush with a bearing surface of the first bearing frame 211 (specifically, a bottom of the V-shaped groove of the bearing block) in the vertical direction, or one end of the second vertical adjustment mechanism 222 away from the second horizontal adjustment mechanism 232 can be arranged to be lower than the bearing surface of the first bearing frame 211.

As described above, the second vertical adjustment mechanism 222 may include a linear driving mechanism such as a cylinder, a hydraulic cylinder or a linear motor. In this case, the linear driving mechanism of the second vertical adjustment mechanism 222 may be mounted on the first bearing frame 211, so that the first vertical adjustment mechanism 221 can drive the second vertical adjustment mechanism 222 to move in the vertical direction relative to the powered chassis 100.

In another embodiment of the present application, the second vertical adjustment mechanism 222 further includes a guiding rail 201 and a slider 202, wherein the guiding rail 201 and the slider 202 cooperate in a sliding manner, and the second bearing frame 212 is fixedly connected to the slider 202, so that the guiding rail 201 and the slider 202 are used to provide guiding and limiting functions for the second bearing frame 212 in the position adjustment direction of the second vertical adjustment mechanism 222, wherein the guiding function causes the second bearing frame 212 to move in a direction along the guiding rail 201, but not move in a direction perpendicular to the guiding rail 201, and the limiting function causes the second bearing frame 212 to move within a certain range along the guiding rail 201, thereby improving a driven accuracy of the second bearing frame 212, and improving the stability and reliability of the linear driving mechanism in the second vertical adjustment mechanism 222.

In the case of adopting the above technical solution, the guiding rail 201 of the second vertical adjustment mechanism 222 can be fixed to a side of the first vertical adjustment mechanism 221 facing the second bearing frame 212, so that the second vertical adjustment mechanism 222 can be mounted on the first bearing frame 211, thereby ensuring that the first vertical adjustment mechanism 221 can drive the second vertical adjustment mechanism 222 to move, and preventing the linear driving mechanism in the second vertical adjustment mechanism 222 from being used as a mounting mechanism and a driving mechanism of the second bearing frame 212 at the same time which has an adverse effect on the working reliability and service life of the linear driving mechanism. In addition, when the second vertical adjustment mechanism 222 includes the guiding rail 201, by mounting the second vertical adjustment mechanism 222 on the first bearing frame 211, it is also possible to prevent the guiding rail 201 of the second vertical adjustment mechanism 222 from interfering with the fully loaded material roll 900.

As described above, the first bearing frame 211 may include two bearing blocks, and the two bearing blocks may be mounted together to the first vertical adjustment mechanism 221. More specifically, the first bearing frame 211 includes a first bearing block and a second bearing block, which are used collectively for bearing the material to be transferred, and the first bearing block and the second bearing block are spaced apart from each other to ensure that the first bearing block and the second bearing block both can provide reliable bearing for the material to be transferred during the process of bearing the material to be transferred.

In another embodiment of the present application, two first vertical adjustment mechanisms 221 are provided, and the first bearing block and the second bearing block are arranged in one-to-one correspondence with the two first vertical adjustment mechanisms 221, so that positions of the first bearing block and the second bearing block in the vertical direction can be adjusted individually, so as to further enhance the adjustment range of the position of the transferred material by the docking robot, and prevent the adverse effects on the transfer process of the material to be transferred due to factors such as an uneven working surface.

Furthermore, two first horizontal adjustment mechanisms 231 and two second horizontal adjustment mechanisms 232 are provided, the two first vertical adjustment mechanisms 221 are mounted on the two second horizontal adjustment mechanisms 232 in one-to-one correspondence, and the two second horizontal adjustment mechanisms 232 are mounted on the two first horizontal adjustment mechanisms 231 in one-to-one correspondence. This allows the positions of the first bearing block and the second bearing block in the horizontal plane to be adjusted individually, so as to further reduce requirements for the displacement control accuracy of the powered chassis 100, thereby reducing the control difficulty of the powered chassis 100 and improving the docking efficiency.

Specifically, structures and sizes of the two first vertical adjustment mechanisms 221 can be the same, and correspondingly, structures and sizes of the two first horizontal adjustment mechanisms 231 can be the same, and structures and sizes of the two second horizontal adjustment mechanisms 232 can also be the same, thereby reducing difficulty of preparing parts of the docking robot and assembly difficulty of the docking robot.

As described above, the docking robot is used for moving to the machine tool to replace the material roll 900. During the movement of the docking robot, a sensor for detecting a position is usually required to detect a relative position between the docking robot and the machine tool to assist the movement of the docking robot. In one possible embodiment, a ranging sensor can be used for detecting the distance between the docking robot and the machine tool in a certain direction. For this purpose, a relative position relationship between the docking robot and the machine tool can be obtained by arranging multiple ranging sensors.

In order to reduce the difficulty of position detection of the docking robot, the relative position relationship between the docking robot and the machine tool in a three-dimensional space can also be obtained by using a positioning camera 300, wherein the relative position relationship refers to a direction and size of the relative position between the docking robot and the machine tool. Based on this, the docking robot can include the positioning camera 300, which can be mounted on the first bearing frame 211 to ensure that the measured relative position relationship can represent a relative position between the material to be transferred and the machine tool.

As described above, the second vertical adjustment mechanism 222 can be mounted on the first bearing frame 211. On this basis, based on a driving direction and a driving size of the second vertical adjustment mechanism 222, by combining a measurement result of the positioning camera 300, a position of the second bearing frame 212 relative to the machine tool in a three-dimensional space can be determined. Of course, in order to obtain a more accurate position detection result of the second bearing frame 212, in another embodiment of the present application, in one possible embodiment, each of the first bearing frame 211 and the second bearing frame 212 has a positioning camera mounted thereon, so as to use a corresponding positioning camera 300 to respectively detect the position of the first bearing frame 211 relative to the machine tool in a three-dimensional space and the position of the second bearing frame 212 relative to the machine tool in a three-dimensional space, thereby improving the transfer accuracy of the material roll 900, that is, making the docking robot have high-precision docking capacity.

As described above, the first vertical adjustment mechanism 221 includes a linear driving mechanism. In another embodiment of the present application, the first vertical adjustment mechanism 221 includes a driving member 207, a guiding rail 201 and a slider 202, wherein the driving member 207 specifically can be the aforementioned linear driving mechanism, and the driving member 207 is used for driving the first bearing frame 211 to move in the vertical direction; the slider 202 can be mounted on the second horizontal adjustment mechanism 232, specifically, the slider 202 can be fixed on the second horizontal adjustment mechanism 232 and slidably mounted on the guiding rail 201, and the first bearing frame 211 is mounted on the guiding rail 201, so that the slider 202 can slide along the guiding rail 201 and provide guiding and limiting functions for the movement process of the first bearing frame 211, wherein the guiding function causes the first bearing frame 211 to move in the direction along the guiding rail 201, but not move in the direction perpendicular to the guiding rail 201, and the limiting function causes the first bearing frame 211 to move within a certain range along the guiding rail 201, thereby improving the movement accuracy of the first bearing frame 211, and improving the stability and reliability of the driving member 207 in the first vertical adjustment mechanism 221. In the process of assembling the first vertical adjustment mechanism 221, the guiding rail 201 can be connected to the driving member 207, or the first bearing frame 211 can be directly connected to the driving member 207.

As described above, the driving member 207 can be a linear driving mechanism. In another embodiment of the present application, the driving member 207 includes a rotating motor, and the first vertical adjustment mechanism 221 further includes a rotation transmission mechanism and a linear transmission mechanism, so that the rotating motor can indirectly drive the first bearing frame 211 to move in the vertical direction through the rotation transmission mechanism and the linear transmission mechanism. The driving accuracy and bearing capacity of this driving method are relatively high, and the bearing stability is relatively good.

Specifically, a transmission principle of the rotation transmission mechanism can be chain transmission or belt transmission, etc. In one specific embodiment of the present application, the rotation transmission mechanism includes a first gear 205 and a second gear 206 that are meshed with each other, so as to utilize gear transmission to achieve a transmission of rotating torque and improve transmission stability and transmission accuracy.

The linear transmission mechanism is a mechanism that converts a rotational motion into a linear motion, which can adopt a gear rack mechanism or a trapezoidal leading screw, etc. In another embodiment of the present application, the linear transmission mechanism may include a leading screw 203 and a leading screw nut 204, and the leading screw nut 204 is spirally mounted on the leading screw 203, and the leading screw nut 204 is fixedly connected to the first bearing frame 211, so that when the leading screw 203 rotates, the leading screw nut 204 can be driven to drive the first bearing frame 211 to move along an axial direction of the leading screw 203. The transmission efficiency of this linear transmission mechanism is relatively high, and the transmission stability is also relatively good.

Accordingly, in the process of assembling the first vertical adjustment mechanism 221, the first gear 205 can be mounted on the rotating motor, and the second gear 206 can be mounted on the leading screw 203, so that the rotating motor can drive the leading screw 203 to rotate through the first gear 205 and the second gear 206, and drive the leading screw nut 204 to move along the leading screw 203, so as to drive the first bearing frame 211 to lift and lower relative to the power base.

In one possible embodiment, the structures of the second vertical adjustment mechanism 222, the first horizontal adjustment mechanism 231, and the second horizontal adjustment mechanism 232 are the same as the structure of the first vertical adjustment mechanism 221, so that the second vertical adjustment mechanism 222, the first horizontal adjustment mechanism 231, and the second horizontal adjustment mechanism 232 all have high driving stability and driving accuracy. Considering that driving conditions of the respective adjustment mechanisms may be different, during assembling the second vertical adjustment mechanism 222, the first horizontal adjustment mechanism 231, and the second horizontal adjustment mechanism 232, the guiding rails 201 of the three are all stationary relative to their corresponding driving members, and the sliders 202 of the three are all movable relative to their corresponding driving members.

The above embodiments of the present application focus on differences between the various embodiments. As long as the different optimization features between the various embodiments are not contradictory, they can be combined to form a more preferred embodiment. Considering the simplicity of the text, they will not be repeated here.

The above description is only preferred embodiments of the present application, and is not intended to limit the scope of protection of the present application. For those skilled in the art, the present application may have various changes and variations. Any modifications, equivalent replacements, improvements, etc. made within the spirit and principles of the present application shall be included within the scope of protection of the present application.

## Claims

1. A docking robot, comprising a powered chassis, a first bearing frame, a second bearing frame, a first vertical adjustment mechanism, a second vertical adjustment mechanism, a first horizontal adjustment mechanism and a second horizontal adjustment mechanism;
wherein the first bearing frame and the second bearing frame are both for bearing a material to be transferred, and the first bearing frame is mounted on the first vertical adjustment mechanism and the second bearing frame is mounted on the second vertical adjustment mechanism, position adjustment directions of the first vertical adjustment mechanism and the second vertical adjustment mechanism are arranged to be parallel, and the first vertical adjustment mechanism and the second vertical adjustment mechanism both are mounted on the second horizontal adjustment mechanism, the second horizontal adjustment mechanism is mounted on the first horizontal adjustment mechanism, and the first horizontal adjustment mechanism is mounted on the powered chassis, position adjustment directions of the first horizontal adjustment mechanism and the second horizontal adjustment mechanism are arranged to be non-parallel and position adjustment directions of the first horizontal adjustment mechanism and the second horizontal adjustment mechanism are both perpendicular to the position adjustment directions of the first vertical adjustment mechanism and the second vertical adjustment mechanism.

2. The docking robot according to claim 1, wherein the second vertical adjustment mechanism is mounted on the first bearing frame.

3. The docking robot according to claim 2, wherein one end of the second vertical adjustment mechanism away from the second horizontal adjustment mechanism is arranged to be below or flush with a bearing surface of the first bearing frame.

4. The docking robot according to claim 2, wherein the second vertical adjustment mechanism comprises a guiding rail and a slider that cooperate in a sliding manner, and the guiding rail is fixed to one side of the first vertical adjustment mechanism facing the second bearing frame, and the second bearing frame is fixedly connected to the slider.

5. The docking robot according to claim 1, wherein two first vertical adjustment mechanisms are provided, the first bearing frame comprises a first bearing block and a second bearing block which are spaced apart from each other, the first bearing block and the second bearing block are used collectively for bearing the material to be transferred, and the first bearing block and the second bearing block are arranged in one-to-one correspondence with the two first vertical adjustment mechanisms.

6. The docking robot according to claim 5, wherein two first horizontal adjustment mechanisms and two second horizontal adjustment mechanisms are provided, the two first vertical adjustment mechanisms are mounted on the two second horizontal adjustment mechanisms in one-to-one correspondence, and the two second horizontal adjustment mechanisms are mounted on the two first horizontal adjustment mechanisms in one-to-one correspondence.

7. The docking robot according to claim 1, wherein each of the first bearing frame and the second bearing frame has a positioning camera mounted thereon.

8. The docking robot according to claim 1, wherein the first vertical adjustment mechanism comprises a driving member, a guiding rail and a slider, the driving member is for driving the first bearing frame to move in a vertical direction, the slider is mounted on the second horizontal adjustment mechanism, the first bearing frame is mounted on the guiding rail, and the slider and the guiding rail cooperate in a sliding manner.

9. The docking robot according to claim 8, wherein the driving member comprises a rotating motor, the first vertical adjustment mechanism further comprises a rotation transmission mechanism and a linear transmission mechanism, the rotation transmission mechanism comprises a first gear and a second gear that are meshed with each other, the linear transmission mechanism comprises a leading screw and a leading screw nut, the leading screw nut is spirally mounted on the leading screw, and the leading screw nut is fixedly connected to the first bearing frame, the first gear is mounted on the rotating motor, and the second gear is mounted on the leading screw.

10. The docking robot according to claim 9, wherein structures of the second vertical adjustment mechanism, the first horizontal adjustment mechanism and the second horizontal adjustment mechanism are same as a structure of the first vertical adjustment mechanism.
